# EUROPÄISCHE PATENTSCHRIFT

(11) **EP 1 490 252 B1**
(45) Veröffentlichungstag und Bekanntmachung des Hinweises auf die Patenterteilung: **16.11.2005**
(21) Anmeldenummer: 03744832.1
(22) Anmeldetag: 21.03.2003
(51) Int. Cl.: B60T 17/08

(54) **FEDERSPEICHERBREMSZYLINDER**
SPRING BRAKE ACCUMULATOR CYLINDER
CYLINDRE DE FREIN A ACCUMULATEUR

(30) Priorität: 27.03.2002 DE 10214033
(43) Veröffentlichungstag der Anmeldung: 29.12.2004
(73) Patentinhaber: KNORR-BREMSE SYSTEME FÜR NUTZFAHRZEUGE GMBH, 80809 München (DE)
(72) Erfinder: FANTAZI, Alain, F-14160 Dives sur mer (FR); HEMERY, Franck, F-14600 Honfleur (FR)
(74) Vertreter: Mattusch, Gundula
(86) Internationale Anmeldenummer: PCT/EP2003/002972
(87) Internationale Veröffentlichungsnummer: WO 2003/080416

(56) Entgegenhaltungen:
- DE-A- 3 404 014
- DE-A- 10 109 515
- DE-U- 20 021 393
- DE-U- 20 022 245
- GB-A- 1 143 036

## Beschreibung

Die Erfindung betrifft einen pneumatischen Aktuator für die Bremsanlage eine Fahrzeugs. Solche pneumatischen Aktuatoren sind häufig als Federspeicherbremszylinder ausgebildet (siehe z.B. DE-U-200 22 245 und DE-3 404 014), die einen hinteren Zylinder aufweisen, in dem ein hinterer Kolben verschieblich angeordnet ist. Eine Seite des hinteren Kolbens und die Innenwand des hinteren Zylinders bilden eine hintere Belüftungskammer aus. Auf der anderen Seite des hinteren Kolbens ist dabei eine Speicherfeder vorgesehen, die durch den hinteren Kolben zusammengepresst werden kann. Die hintere Belüftungskammer wird dabei von einem Zwischenflansch abgeschlossen, der von einer Verschiebestange durchtreten wird, die am hinteren Kolben anliegt. Die Verschiebestange kann durch den hinteren Kolben im Zwischenflansch verschoben werden. Auf der der hinteren Belüftungskammer gegenüber liegenden Seite des Zwischenflansches ist eine vordere Belüftungskammer vorgesehen, die von einem in einem vorderen Zylinder beweglichen vorderen Kolben begrenzt wird. Auf der Vorderseite des vorderen Kolbens ist eine Betätigungsstange für ein Bremselement der Bremsanlage des Fahrzeugs vorgesehen. Der hintere Kolben und der vordere Kolben stehen dabei über die Verschiebestange so miteinander in Kontakt, daß der vordere Kolben durch den hinteren Kolben verschiebbar ist.

Bei einer Inbetriebnahme des Fahrzeugs wird dabei die hintere Belüftungskammer gegen den Druck der Speicherfeder mit Druckluft befüllt, so daß sich der hintere Kolben in den hinteren Zylinder hineinbewegt. Dabei bewegt sich die Verschiebestange im Zwischenflansch ebenfalls nach hinten, wodurch der vordere Kolben von der Beaufschlagung durch die Verschiebestange entlastet wird. Der vordere Kolben und die Betätigungsstange können sich deswegen ebenfalls nach hinten in den vorderen Zylinder hinein bewegen, wodurch das Bremselement der Bremsanlage freigegeben wird. Das Fahrzeug geht daher von einem durch die Speicherfeder gebremsten Zustand in einen ungebremsten Zustand über. Durch eine Beaufschlagung der vorderen Belüftungskammer mit Druckluft kann der vordere Kolben im vorderen Zylinder bewegt werden, wodurch über die Betätigungsstange das Bremselement der Bremsanlage beaufschlagbar ist. Dadurch können Bremsungen des Fahrzeugs selektiv erfolgen. Bei einem Ausfall der Druckluftversorgung des Fahrzeugs nimmt der Druck der Druckluft in der hinteren Belüftungskammer ab. Die Speicherfeder drückt nachfolgend den hinteren Kolben zurück in die Ausgangsstellung, wobei die Verschiebestange den vorderen Kolben beaufschlagt. Der vordere Kolben wiederum verschiebt die Betätigungsstange so, daß das Bremselement der Bremsanlage betätigt wird.

Durch die vorgenannte Ausbildung wird ein ausfallsicherer Betrieb des Fahrzeugs erreicht.

Die im Stand der Technik bekannten pneumatischen Aktuatoren sind kompliziert aufgebaut und lassen sich nur aufwendig herstellen. Weiterhin ergeben sich häufig Dichtheitsprobleme, und zwar besonders dann, wenn die eingesetzten Kolben eine flexible Membran aufweisen.

Es ist daher Aufgabe der Erfindung, einen verbesserten pneumatischen Aktuator bereitzustellen, der sich einfach herstellen läßt.

Diese Aufgabe wird durch den Gegenstand des unabhängigen Anspruchs 1 und durch die Verfahren gemäß Anprüchen 5 und 6 gelöst. Vorteilhafte Weiterbildungen ergeben sich aus den jeweiligen abhängigen Ansprüchen.

Gemäß einem der der Erfindung zugrunde liegenden Gedanken ist der Zwischenflansch im Inneren des hinteren Zylinders oder im Inneren des vorderen Zylinders aufgenommen. Dabei ist der vordere Zylinder am hinteren Zylinder befestigt. Gegenüber den im Stand der Technik bekannten pneumatischen Aktuatoren ergeben sich aus dieser Gestaltung erhebliche Vorteile. Zum einen läßt sich der erfindungsgemäße Aktuator stapelartig aufbauen, beispielsweise in einem Arbeitsgang den hinteren Zylinder mit den darin angeordneten Bauteilen und in einem anderen Arbeitsgang den vorderen Zylinder mit den entsprechenden Bauteilen. Zur Endmontage braucht dann nur noch der Zwischenflansch in den hinteren Zylinder oder in den vorderen Zylinder eingebracht werden, worauf die Verbindung zwischen hinterem und vorderem Zylinder hergestellt wird.

Eine zuverlässige Verbindung zwischen hinteren Zylinder und vorderen Zylinder läßt sich durch eine formschlüssige Verbindung beispielsweise über eine Schraubgewindeverbindung oder über eine durch einen Umformungsschritt hergestellte Verbindung erreichen. Dabei bietet es sich besonders an, eine Wandung des vorderen Zylinders und eine Wandung des hinteren Zylinders durch einen gerollten Bereich miteinander zu verbinden. Vorteilhafterweise wird dabei in einer der Wandungen des vorderen Zylinders oder des hinteren Zylinders ein Absatz vorgesehen, über den ein Bereich des anderen Zylinders gerollt wird. Dadurch lassen sich besonders haltbare Verbindungen zwischen hinterem Zylinder und vorderem Zylinder herstellen, wobei eine zuverlässige Verbindung über den gesamten Umfang des Gehäuses des betreffenden Zylinders herstellbar ist.

Eine besonders vorteilhafte Ausbildung der Erfindung ergibt sich dann, wenn der vordere Kolben oder der hintere Kolben eine im wesentlichen kreisscheibenförmige oder kreisringförmige flexible Membran aufweist, die im Bereich ihres äußeren Membranrandes mit der Wandung des vorderen Zylinders oder des hinteren Zylinders verbunden ist. Bei dieser Ausbildung des betreffenden Kolbens ist der Membranrand zwischen der Wandung des Zylinders und dem Zwischenflansch eingefasst. Mit dem erfindungsgemäßen pneumatischen Aktuator kann eine solche Verbindung auf besonders einfache und zuverlässige Weise hergestellt werden. Anders als bei den im Stand der Technik bekannten pneumatischen Aktuatoren kann der erfindungsgemäße pneumatische Aktuator auf einfache Weise durch einen einzigen Arbeitsschritt endgefertigt und abgedichtet werden. Durch das Zusammenfügen der Wandung des hinteren Zylinders und der Wandung des vorderen Zylinders kann eine etwaige vorgesehene Membran auf einfache Weise und besonders zuverlässig eingebaut werden, wobei eine besonders gute Dichtheit erreicht wird.

Das erfindungsgemäße Herstellungsverfahren sieht dabei vor, daß der vordere Zylinder in einem letzten Arbeitsschritt mit dem hinteren Zylinder verbunden wird, wobei das Befestigen des vorderen Zylinders am hinteren Zylinder durch Schweißen, Schrauben, Löten, Rollen und/oder Klemmen mit einer Manschette erfolgen kann.

Die Erfindung ist in der Zeichnung anhand von drei Ausführungsbeispielen näher veranschaulicht.
- Figur 1: zeigt einen ersten Federspeicherbremszylinder im Querschnitt,
- Figur 2: zeigt einen zweiten Federspeicherbremszylinder im Querschnitt und
- Figur 3: zeigt einen dritten Federspeicherbremszylinder im Querschnitt.

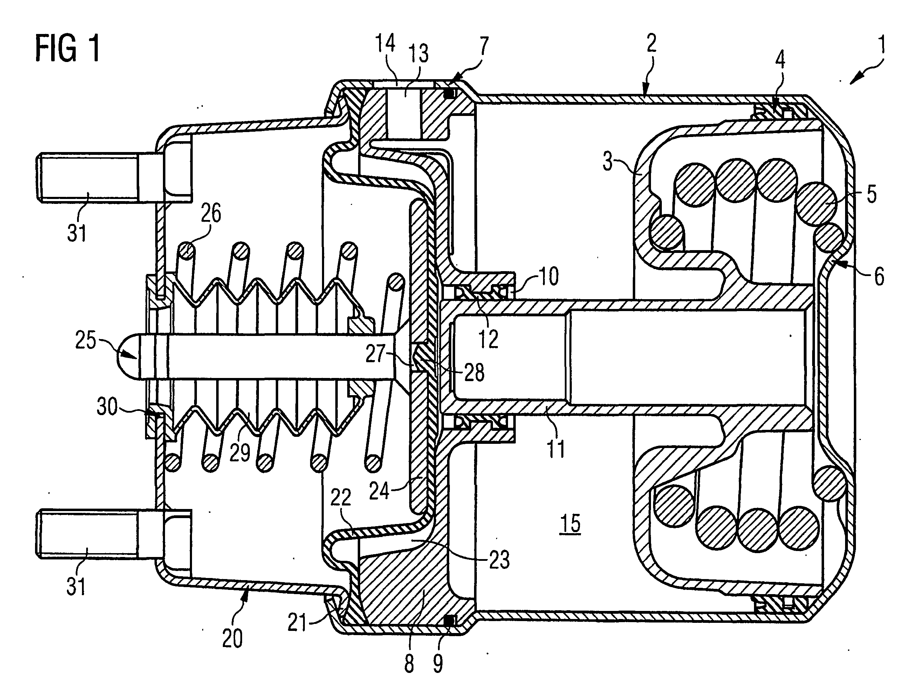

Figur 1 zeigt einen Querschnitt durch einen ersten Federspeicherbremszylinder 1. Der Federspeicherbremszylinder 1 hat einen topfförmigen hinteren Zylinder 2, der aus Stahlblech gefertigt ist. Im hinteren Zylinder 2 ist ein hinterer Kolben 3 vorgesehen, der über eine umlaufende Dichtung 4 gegen die Innenwandung des hinteren Zylinders 2 abgedichtet ist. Der hintere Kolben 3 ist dabei längsverschieblich.im hinteren Zylinder 2 angeordnet. Auf der Rückseite des hinteren Kolbens 3 ist eine Speicherfeder 5 vorgesehen, die sich in einem Bodenbereich 6 des hinteren Zylinders 2 abstützt.

Gegenüber dem Bodenbereich 6 ist die Wandung des hinteren Zylinders 2 zu einem Aufnahmebereich 7 erweitert ausgebildet.

Im Aufnahmebereich 7 ist dabei ein kreisscheibenförmiger Zwischenflansch 8 aufgenommen, der auf seiner Außenseite mit einem O-Ring 9 gegenüber dem Aufnahmebereich 7 luftdicht abgedichtet ist. Der Zwischenflansch 8 weist im Bereich seiner Symmetrieachse eine Durchgangsöffnung 10 auf, in der eine am hinteren.Kolben 3 ausgebildete Verschiebestange 11 geführt ist. Zur Abdichtung ist dabei zwischen der Verschiebestange 11 und der Durchgangsöffnung 10 eine Gummidichtung 12 eingebracht.

Im Zwischenflansch 8 ist dabei auf einer Seite noch eine Belüftungsöffnung 13 als Radialbohrung im äußeren Rand des Zwischenflansches 8 vorgesehen. An deren Austrittstelle im Bereich des Aufnahmebereichs 7 ist zum Anschluß einer Versorgungsleitung eine Aussparung 14 vorgesehen. Über die Belüftungsöffnung 13 kann dabei eine von dem Zwischenflansch 8, von dem hinteren Zylinder 2 und von dem hinteren Kolben 3 gebildete hintere Belüftungskammer 15 mit Druckluft versorgt werden, so daß der hintere Kolben 3 gegen die Druckkraft der Speicherfeder 5 in die in Figur 1 gezeigte Stellung bewegt werden kann.

An den hinteren Zylinder 2 schließt sich der vordere Zylinder 20 an, der topfförmig aus Stahlblech hergestellt ist. Der vordere Zylinder 20 weist dabei einen umgebördelten Befestigungsrand 21 auf, der absatzförmig auf die Außenseite des vorderen Zylinders 20 übersteht. Der Aufnahmebereich 7 ist dabei so mit einem Rollverfahren umgebogen, daß der Befestigungsrand 21 axial festgehalten wird. Dabei ist zwischen dem Befestigungsrand 21 und dem Zwischenflansch 8 eine kreisscheibenförmige flexible Gummimembran 22 vorgesehen, die eine vordere Belüftungskammer 23 begrenzt. Die vordere Belüftungskammer 23 wird dabei außerdem noch von einer Seite des Zwischenflansches 8 und von einem Bereich der durch den Zwischenflansch 8 hindurchragenden Verschiebestange 11 gebildet.

Über in dieser Ansicht nicht sichtbare Belüftungeinrichtungenn kann die vordere Belüftungskammer 23 selektiv mit Druckluft beaufschlagt werden.

Im inneren Bereich der Gummimembran 22 ist eine Druckplatte 24 mit einer sich im Bereich der Symmetrieachse des ersten Federspeicherbremszylinders 1 erstreckenden Betätigungsstange 25 vorgesehen. Die Druckplatte 24 wird dabei von einer Rückstellfeder 26 stets gegen die Gummimembran 22 gepresst. Eine in der Druckplatte 24 vorgesehene Zentrieröffnung 27 umfasst dabei einen in der Gummimembran 22 ausgebildeten Zentriernoppen 28, so daß die Lage der Betätigungsstange 25 bei einer Bewegung der Druckplatte 24 und der Gummimembran 22 innerhalb eines gewünschten Bereichs bleibt.

Ein Faltenbalg 29, der sich von einer Austrittsöffnung 30 in einem Boden des vorderen Zylinders 20 zu der Betätigungsstange 25 hin erstreckt, dichtet dabei das Innere des vorderen Zylinders 20 gegen von außen eintretenden Schmutz ab. Zur Befestigung des ersten Federspeicherbremszylinders 1 an einem Fahrzeug sind dabei weiterhin zwei Befestigungsbolzen 31 im Boden des vorderen Zylinders 20 eingelassen.

Bei dem ersten Federspeicherbremszylinder 1 ist dabei eine besonders gute Abdichtung der vorderen Belüftungskammer 23 gegeben. Der äußere Rand der Gummimembran 22 wird dabei nämlich durch die hier vorliegende Gestaltung von hinterem Zylinder 2, vom Zwischenflansch 8, vom Befestigungsrand 21 und von dem im Befestigungsbereich im Querschnitt keilförmigen Rand der Gummimembran 22 besonders zuverlässig und dicht gehalten.

Zur Betätigung des Federspeicherbremszylinders 1 wird dabei auf bekannte Weise verfahren, indem die hintere Belüftungskammer 15 bzw. die vordere Belüftungskammer 23 mit Druckluft beaufschlagt wird. Die Betätigung eines in dieser Ansicht nicht gezeigten Bremselements eines Fahrzeugs erfolgt dabei über die Betätigungsstange 25.

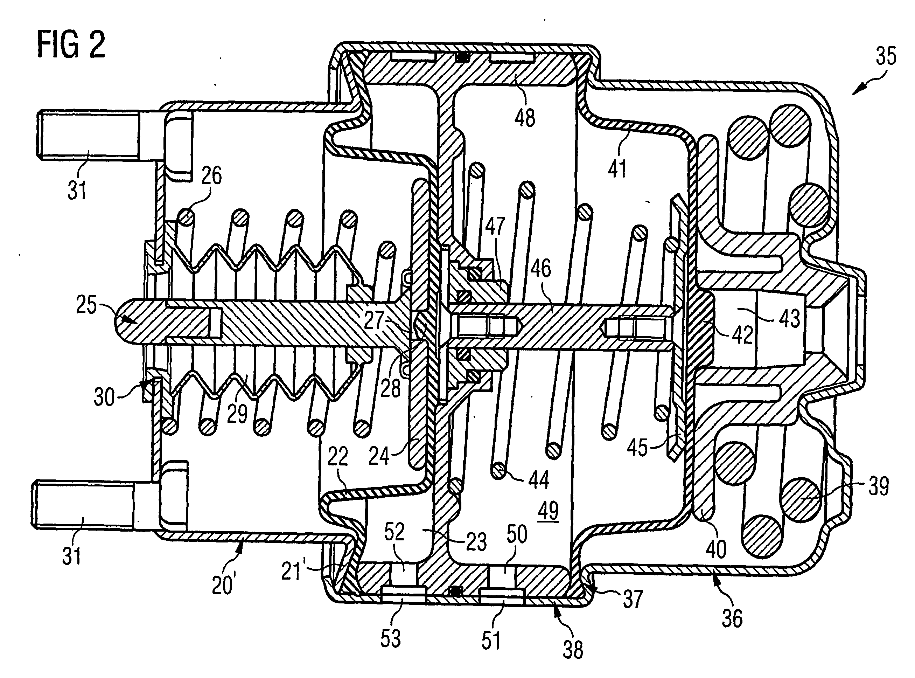

Zum Zusammenbau des ersten Federspeicherbremszylinders 1 wird dabei wie folgt verfahren. In einem ersten Herstellungsschritt wird der hintere Zylinder 2 bereitgestellt. Daraufhin wird die Speicherfeder 5 zusammen mit dem hinteren Kolben 3 in den hinteren Zylinder 2 eingesetzt. Anschließend wird der Zwischenflansch 8 in den hinteren Zylinder 2 eingesetzt, so daß dieser im Aufnahmebereich 7 zu liegen kommt. Anschließend wird die Gummimembran 22 auf den Zwischenflansch 8 aufgelegt, so daß deren äußerer Rand im Aufnahmebereich 7 an der Innenwand des hinteren Zylinders 2 anliegt. Auf die Gummimembran 22 setzt man nun die Druckplatte 24 zusammen mit der Rückstellfeder 26 auf, wobei abschließend der vordere Zylinder 20 unter einer konstanten Druckkraft entgegen dem Druck der Rückstellfeder 26 in den Aufnahmebereich 7 des hinteren Zylinders 2 eingedrückt wird, bis er auf dem äußeren Rand der Gummimembran 22 ruht. In diesem Zustand wird der über den vorderen Zylinder 20 überstehende Rand des Aufnahmebereichs 7 umgerollt, so daß die in Figur 2 gezeigte Verbindung zwischen vorderem Zylinder 20 und hinteren Zylinder 2 hergestellt wird. Dabei wird der Randbereich der Gummimembran 22 in Längsrichtung des ersten Federspeicherbremszylinders 1 zusammengepresst, so daß sich eine dichte Verbindung ergibt.

Figur 2 zeigt einen zweiten Federspeicherbremszylinder 35 im Querschnitt. Der zweite Federspeicherbremszylinder 35 gliedert sich in einen hinteren Zylinder 36, der topfförmig aus Stahlblech hergestellt ist, sowie in einen vorderen Zylinder 20', der zusammen mit den in ihm aufgenommenen Bauteilen im wesentlichen dem vorderen Zylinder 20 aus Figur 1 entspricht. Der Befestigungsrand 21' des vorderen Zylinders 20' hat einen größeren Durchmesser als der entsprechende Befestigungsrand 21 des vorderen Zylinders 20 aus Figur 1. Der hintere Zylinder 36 ist dabei unter Ausbildung eines Absatzes 37 zu einem Aufnahmebereich 38 erweitert. Auf dem Boden des hinteren Zylinders 36 ist eine Speicherfeder 39 vorgesehen, die gegen eine Speicherfederdruckplatte 40 vorspannbar ist. Weiterhin ist eine hier nicht gezeigte mechanische Rückstelleinrichtung zur Betätigung der Speicherfederdruckplatte 40 vorgesehen, mit der die Speicherfeder 39 in die in Figur 2 gezeigte Stellung zusammengedrückt werden kann.

Weiterhin ist im hinteren Zylinder 36 eine Speichermembran 41 aus elastischem Material vorgesehen. Die Speichermembran 41 liegt dabei an ihrem äußeren Rand, an dem sie einen keilförmigen Querschnitt aufweist, am Absatz 37 im Aufnahmebereich 38 auf. An ihrem inneren Bereich greift die Speichermembran 41 mit einem Zentriernocken 42 in eine Zentrieröffnung 43 der Speicherfederdruckplatte 40 ein. Eine Speichermembranrückstellfeder 44 drückt über eine Speichermembranplatte 45 die Speichermembran 41 an die Speicherfederdruckplatte 40 an. An einem mittigen Bereich der Speichermembranplatte 45 ist eine Verschiebestange 46 vorgesehen, die sich in Richtung der Symmetrieachse des hinteren Zylinders 36 erstreckt. Die Verschiebestange 46 ist in einem luftdicht ausgebildeten Bereich eines Zwischenflanscheinsatzes 47 geführt, der in einer mittigen Öffnung eines Zwischenflansches 48 eingesetzt ist. Der Zwischenflansch 48 wiederum ist im Aufnahmebereich 38 des hinteren Zylinders 36 eingesetzt, wobei der Zwischenflansch 48 die Speichermembran 41 gegen den Absatz 37 klemmt. Der Zwischenflansch 48 bildet dabei zusammen mit der Speichermembran 41 eine hintere Belüftungskammer 49 aus, die über eine hintere Belüftungsöffnung in einem Randbereich des Zwischenflansches 48 und über eine hintere Aussparung 51 im Aufnahmebereich 38 mit Druckluft beaufschlagt werden kann. Auf der Verschiebestange des Zwischenflansches 48 bildet dieser zusammen mit der Gummimembran 22 im vorderen Zylinder 20' die vordere Belüftungskammer 23' aus, die über eine vordere Belüftungsöffnung 52 im Zwischenflansch 48 und eine vordere Aussparung 53 im Aufnahmebereich 38 mit Druckluft beaufschlagbar ist.

Die Funktionsweise des zweiten Federspeicherbremszylinders 35 entspricht im wesentlichen den aus dem Stand der Technik bekannten Federspeicherbremszylindern. Durch die Beaufschlagung der hinteren Belüftungskammer 49 kann die Speicherfeder 39 in die in Figur 2 gezeigte Stellung bewegt werden. Durch die Beaufschlagung der vorderen Belüftungskammer 23' mit Druckluft kann die Betätigungsstange 25 zur Bewegung eines in dieser Ansicht nicht gezeigten Bremselements einer Bremsanlage eines Fahrzeugs veranlasst werden.

Zum Zusammenbau des zweiten Federspeicherbremszylinders 35 wird wie folgt vorgegangen. Zunächst wird der hintere Zylinder 36 bereitgestellt, und zwar mit eingesetzter Speicherfeder 39 und Speicherfederdruckplatte 40. Danach wird die Speichermembran 41 in den Aufnahmebereich 38 eingesetzt, so daß deren Randbereich auf dem Absatz 37 zu liegen kommt. Anschließend wird die Speichermembranplatte 45, die Verschiebestange 46 und der Zwischenflansch 48 mit dem Zwischenflanscheinsatz 47 in den Aufnahmebereich 38 eingesetzt. Anschließend wird der vordere Zylinder 20' mit den darin enthaltenen Bauteilen einschließlich der Gummimembran 22 in den Aufnahmebereich 38 eingesetzt, wobei der gesamte zweite Federspeicherbremszylinder 35 mit einer in Figur 2 nicht gezeigten Spanneinrichtung entlang seiner Symmetrieachse zusammengepresst wird. Dabei wird der Befestigungsrand 21' unter Klemmung der Gummimembran 22, des Zwischenflansches 48 und der Speichermembran 41 gegen den Absatz 37 des Aufnahmebereichs 38 gedrückt. In einem abschließenden Schritt wird der über der Befestigungsrand 21' überstehende Rand des Aufnahmebereichs 38 in die in Figur 2 gezeigte Lage umgerollt, so daß der vordere Zylinder 20' und der hintere Zylinder 36 fest miteinander verbunden sind.

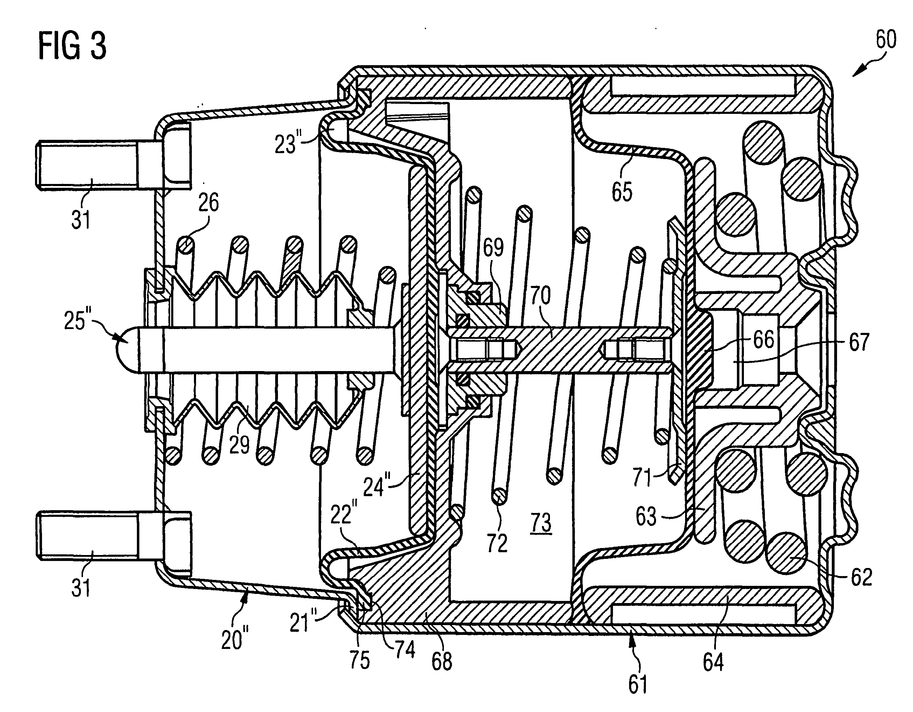

Figur 3 zeigt einen dritten Federspeicherbremszylinder 60 im Querschnitt. Der dritte Federspeicherbremszylinder 60 gliedert sich in einen hinteren Zylinder 61, der topfförmig aus Stahlblech hergestellt ist, sowie in einen vorderen Zylinder 20", der zusammen mit den in ihm enthaltenen Bauteilen im wesentlichen dem vorderen Zylinder 20 aus Figur 1 entspricht.

Im Bodenbereich des hinteren Zylinders 61 ist eine Speicherfeder 62 zusammen mit einer Speicherfederdruckplatte 63 vorgesehen. Außerdem ist ein Einsatzring 64 in den hinteren Zylinder 61 eingesetzt, der an der Innenwand des hinteren Zylinders 61 anliegt. Von dem dem Boden des hinteren Zylinders 61 gegenüberliegen Ende des Einsatzrings 64 aus erstreckt sich eine Speichermembran 65 durch den hinteren Zylinder 61. Dabei liegt der im Querschnitt keilförmig ausgestaltete Rand der Speichermembran 65 auf dem Rand des Einsatzrings 64 auf, der an dieser Stelle mit einer Neigung von innen nach außen zu der Wand des hinteren Zylinders 61 hin versehen ist. Auf ihrer Innenseite weist die Speichermembran 65 einen Zentriernocken 66 auf, der in eine Zentrieröffnung 67 in der Speicherfederdruckplatte 63 eingreift.

Weiterhin ist in den hinteren Zylinder 61 ein Zwischenflansch 68 eingesetzt, der an seiner der Speichermembran 65 zugewandten Seite einen nach außen zur Wandung des hinteren Zylinders 61 geneigt abfallenden Bereich aufweist. Dieser Bereich liegt auf dem Randbereich der Speichermembran 65 auf. Der Zwischenflansch 68 weist mittig einen Zwischenflanscheinsatz 69 auf, in dem eine Verschiebestange 70 beweglich geführt ist. Die Verschiebestange 70 weist an ihrer zum Boden des hinteren Zylinders 61 weisenden Seite eine Speichermembranplatte 71 auf. Zwischen der Speichermembranplatte 71 und dem Zwischenflansch 68 erstreckt sich eine Speichermembranrückstellfeder 72. Zwischen der Speichermembran 65 und dem Zwischenflansch 68 ist dabei eine hintere Belüftungskammer 73 ausgebildet, die über in dieser Ansicht nicht gezeigte Belüftungsmittel mit Druckluft beaufschlagbar ist.

Auf der der hinteren Belüftungskammer gegenüberliegenden Seite ist im Zwischenflansch 68 in einem nahe an der Innenwand des hinteren Zylinders 61 liegenden Bereich eine umlaufende kreisringförmige Gummimembrannut 74 ausgebildet. In der Gummimembrannut 74 ist ein verdickter Außenrandbereich 75 der Gummimembran 22" eingelassen. Der Außenrandbereich 75 wird durch einen Befestigungsrand 21" des vorderen Zylinders 20" in den Zwischenflansch 68 gedrückt. Dabei ist zwischen der Gummimembran 22" und dem Zwischenflansch 68 die vordere Belüftungskammer 23" ausgebildet, die über in dieser Ansicht nicht gezeigte Belüftungsmittel mit Druckluft beaufschlagbar ist. An der Gummimembran 22" liegt eine vordere Druckplatte 24" an, die mit einer aus dem vorderen Zylinder 20" herausragenden Betätigungsstange 25" verbunden ist.

Der dritte Federspeicherbremszylinder 60 funktioniert im wesentlichen so wie die im Stand der Technik bekannten Federspeicherbremszylinder, und zwar durch Beaufschlagung der hinteren Belüftungskammer 73 sowie der vorderen Belüftungskammer 23" mit Druckluft. Dabei kann durch die bewegliche Betätigungsstange 25" ein in dieser Ansicht nicht gezeigte Bremselement einer Bremsanlage eines Fahrzeugs betätigt werden.

Zum Zusammenbau des dritten Federspeicherbremszylinders 60 wird dabei wie folgt vorgegangen.

In einem ersten Herstellungsschritt wird der hintere Zylinder 61 bereitgestellt. In den hinteren Zylinder 61 werden aufeinanderfolgend die Speicherfeder 62, der Einsatzring 64, die Speicherfederdruckplatte 63 sowie die Speichermembran 65 eingesetzt. Danach werden die Speichermembranplatte 71, die Speichermembranrückstellfeder 72 und der Zwischenflansch 68 zusammen mit dem Zwischenflanscheinsatz 69 und der Verschiebestange 70 eingesetzt, bis diese in der in Figur 3 gezeigten Stellung zu liegen kommen. Danach wird die Gummimembran 22' so eingesetzt, daß deren Außenrandbereich 75 in der Gummimembrannut 74 zu liegen kommt. Zuletzt wird der vordere Zylinder 20" in den hinteren Zylinder 61 eingesetzt. Der dritte Federspeicherbremszylinder 60 wird dabei insgesamt in seiner Längsrichtung mit einer in dieser Ansicht nicht gezeigten Spannvorrichtung zusammengedrückt, so daß die Gummimembran 22" mit ihrem Außenrandbereich 75 fest in die Gummimembrannut 74 gepresst wird. Außerdem wird der Außenrandbereich der Speichermembran 65 zwischen dem Zwischenflansch 68 und dem Einsatzring 64 zusammengepresst. In diesem Zustand wird der überstehende Rand des hinteren Zylinders 61 so um den Befestigungsrand 21" des vorderen Zylinders 20" angerollt, daß eine feste Verbindung zwischen vorderen Zylinder 20" und hinteren Zylinder 61 entsteht.

In weiteren hier nicht gezeigten Ausführungsbeispielen ist eine Umkehr der Anordnung zwischen dem vorderen Zylinder und dem hinteren Zylinder vorgesehen, so daß im wesentlichen alle Bauteile zunächst in den vorderen Zylinder eingesetzt werden. Zuletzt wird dann der hintere Zylinder an dem vorderen Zylinder angesetzt, worauf eine Verbindung zwischen vorderem und hinterem Zylinder erfolgt. Die Verbindung zwischen vorderem und hinterem Zylinder kann dabei insbesondere auch durch eine Gewindeverbindung, durch eine Klemmspange oder durch eine Klemmmanschette erfolgen. Erfindungsgemäß kann auch vorgesehen sein, den vorderen und den hinteren Zylinder elektrisch miteinander zu verschweißen, um diese zu verbinden.

### Bezugszeichenliste

- 1: Federspeicherbremszylinder
- 2: hintere Zylinder
- 3: hintere Kolben
- 4: Dichtung
- 5: Speicherfeder
- 6: Bodenbereich
- 7: Aufnahmebereich
- 8: Zwischenflansch
- 9: O-Ring
- 10: Durchgangsöffnung
- 11: Verschiebestange
- 12: Gummidichtung
- 13: Belüftungsöffnung
- 14: Aussparung
- 15: hintere Belüftungskammer

- 20', 20": vordere Zylinder
- 21', 20": Befestigungsrand
- 22": Gummimenbran
- 23', 23": Belüftungskammer
- 24": Druckplatte
- 25": Betätigungsstange
- 26: Rückstellfeder
- 27: Zentrieröffnung
- 28: Zentriernoppen
- 29: Faltenbalg
- 30: Austrittsöffnung
- 31: Befestigungsbolzen

- 35: zweiter Federspeicherbremszylinder
- 36: hinterer Zylinder
- 37: Absatz
- 38: Aufnahmebereich
- 39: Speicherfeder
- 40: Speicherfederdruckplatte
- 41: Speichermembran
- 42: Zentriernocken
- 43: Zentrieröffnung
- 44: Speichermembranrückstellfeder
- 45: Speichermembranplatte
- 46: Verschiebestange
- 47: Zwischenflanscheinsatz
- 48: Zwischenflansch
- 49: hintere Belüftungskammer
- 50: hintere Belüftungsöffnung
- 51: hintere Aussparung
- 52: vordere Belüftungsöffnung
- 53: vordere Aussparung

- 60: dritter Federspeicherbremszylinder
- 61: hintere Zylinder
- 62: Speicherfeder
- 63: Speicherfederdruckplatte
- 64: Einsatzring
- 65: Speichermembran
- 66: Zentriernocken
- 67: Zentrieröffnung
- 68: Zwischenflansch
- 69: Zwischenflanscheinsatz
- 70: Verschiebestange
- 71: Speichermembranplatte
- 72: Speichermembranrückstellfeder
- 73: hintere Belüftungskammer
- 74: Gummimenbrannut
- 75: Außenrandbereich

## Patentansprüche

1. Pneumatischer Aktuator (1; 35; 60) für die Bremsanlage eines Fahrzeugs, insbesondere Federspeicherbremszylinder, der die folgenden Merkmale aufweist:
- einen hinteren Zylinder (2; 36; 61), in dem ein hinterer Kolben (3; 41, 45; 65, 71) verschieblich angeordnet ist,
- eine Seite des hinteren Kolbens (3; 41, 45; 65, 71) und die Innenwand des hinteren Zylinders (2; 36; 61) bilden eine hintere Belüftungskammer (15; 49; 73) aus,
- auf der anderen Seite des hinteren Kolbens (3; 41, 45; 65, 71) ist eine Speicherfeder (5; 39; 62) vorgesehen,
- einen vorderen Zylinder (20, 20', 20"), in dem ein vorderer Kolben (22, 24; 22'', 24'') beweglich angeordnet ist,
- eine Hinterseite des vorderen Kolbens (22, 24; 22", 24") und die Innenwand des vorderen Zylinders (20, 20', 20") bilden eine vordere Belüftungskammer (23, 23', 23") aus,
- an einer Vorderseite des vorderen Kolbens (22, 24; 22'', 24'') ist eine Betätigungsstange (25, 25") für ein Bremselement der Bremsanlage vorgesehen,
- der hintere Kolben (3; 41, 45; 65, 71) und der vordere Kolben (22, 24; 22" , 24'') stehen über eine Verschiebestange (11; 46; 70) so miteinander in Kontakt, daß der vordere Kolben (22, 24; 22", 24") durch den hinteren Kolben (3; 41, 45; 65, 71) verschiebbar ist,
- im Bereich zwischen vorderem Zylinder (20, 20', 20") und hinterem Zylinder (2; 36; 61) ist ein Zwischenflansch (8; 48; 68) vorgesehen, den die Verschiebestange (11; 46; 70) durchtritt,
**gekennzeichnet durch** die folgenden Merkmale:
- der Zwischenflansch (8; 48; 68) ist entweder nur im Inneren des hinteren Zylinders (2; 36; 61) oder im Inneren des vorderen Zylinders (20, 20', 20'') in einem erweiterten Aufnahmebereich (7; 38) aufgenommen,
- der vordere Zylinder (20, 20', 20'') und der hintere Zylinder (2; 36; 61) sind formschlüssig miteinander verbunden, wobei der äußere Membranrand einer Gummimembran (22; 22'; 22'') an einer Seite an dem Zwischenflansch (8; 48; 68) und an der anderen Seite an der Verbindung von vorderem und hinterem Zylinder anliegt.

2. Pneumatischer Aktuator nach Anspruch 1,
**dadurch gekennzeichnet, daß**
eine Wandung des vorderen Zylinders (20, 20', 20") und eine Wandung des hinteren Zylinders (2; 36; 61) durch einen gerollten Bereich einer Wandung mit einem Absatz (21, 21', 21") der anderen Wandung miteinander verbunden sind.

3. Pneumatischer Aktuator nach einem der vorhergehenden Ansprüche ,
**dadurch gekennzeichnet, daß**
der vordere Kolben (22, 24; 22'', 24'') eine im wesentlichen kreisscheibenförmige oder kreisringförmige flexible Membran aufweist, die im Bereich ihres äußeren Membranrandes (75) mit der Wandung des vorderen Zylinders (20, 20', 20") verbunden ist, wobei der Membranrand (75) zwischen der Wandung des vorderen Zylinders (20, 20', 20") und dem Zwischenflansch (8; 48; 68) eingefaßt ist.

4. Pneumatischer Aktuator nach einem der vorhergehenden Ansprüche,
**dadurch gekennzeichnet, daß**
der hintere Kolben (41, 45; 65, 71) eine im wesentlichen kreisscheibenförmige oder kreisringförmige flexible Membran aufweist, die im Bereich ihres äußeren Membranrandes mit der Wandung des hinteren Zylinders (36; 61) verbunden ist, wobei der Membranrand zwischen der Wandung des hinteren Zylinders (36; 61) und dem Zwischenflansch (48; 68) eingefaßt ist.

5. Verfahren zur Montage eines pneumatischen Aktuators für die Bremsanlage eines Fahrzeugs, insbesondere eines Federspeicherbremszylinders, das die folgenden Schritte aufweist:
a) Vorsehen eines hinteren Zylinders (2; 36; 61),
b) Einbringen einer Speicherfeder (5; 39; 62) in den hinteren Zylinder (2; 36; 61),
c) Einbringen eines hinteren Kolbens (3; 41, 45; 65, 71) in den hinteren Zylinder (2; 36; 61),
d) Einbringen eines Zwischenflansches (8; 48; 68) in den hinteren Zylinder (2; 36; 61),
e) Befestigen eines vorderen Zylinders (20, 20', 20"), in dem ein vorderer Kolben (22, 24; 22'', 24") mit einer Betätigungsstange für ein Bremselement der Bremsanlage beweglich angeordnet ist, an dem hinteren Zylinder (2; 36; 61) unter Einschluß des Randes einer flexiblen Membran (22), so daß der hintere Zylinder (2; 36; 61) und der vordere Zylinder (20, 20', 20") über eine den Zwischenflansch (8; 48; 68) durchtretende Verschiebestange (11; 46; 70) miteinander in Kontakt stehen, wobei der vordere Kolben (22, 24; 22", 24") durch den hinteren Kolben (3; 41, 45; 65, 71) verschiebbar ist,
wobei der Schritt e) nach den Schritten a) bis d) durchgeführt wird.

6. Verfahren zur Montage eines pneumatischen Aktuators für die Bremsanlage eines Fahrzeugs, insbesondere eines Federspeicherbremszylinders, das die folgenden Schritte aufweist:
a) Vorsehen eines hinteren Zylinders,
b) Einbringen einer Speicherfeder in den hinteren Zylinder,
c) Einbringen eines hinteren Kolbens in den hinteren Zylinder,
d) Vorsehen eines vorderen Zylinders, in dem ein vorderer Kolben mit einer Betätigungsstange für ein Bremselement der Bremsanlage beweglich angeordnet ist,
e) Einbringen eines Zwischenflansches in den vorderen Zylinder,
f) Befestigen eines vorderen Zylinders an dem hinteren Zylinder, unter Einschluß des Randes einer flexiblen Membran, so daß der hintere Zylinder und der vordere Zylinder über eine den Zwischenflansch durchtretende Verschiebestange miteinander in Kontakt stehen, wobei der vordere Kolben durch den hinteren Kolben verschiebbar ist,
wobei der Schritt f) nach den Schritten a) bis d) durchgeführt wird.

7. Verfahren nach Anspruch 5 oder Anspruch 6,
**dadurch gekennzeichnet, daß**
das Befestigen in Schritt e) durch Schweißen, Schrauben, Löten, Rollen und/oder Klemmen mit einer Manschette erfolgt.

## Claims

1. Pneumatic actuator (1; 35; 60) for the brake system of a vehicle, in particular of a spring brake accumulator cylinder, presenting the following features:
- a rear cylinder (2; 36; 61) in which a rear piston (3; 41, 45; 65, 71) is disposed for displacement,
- one side of said rear piston (3; 41, 45; 65, 71) and the inner wall of said rear cylinder (2; 36; 61) define a rear ventilation chamber (15; 49; 73),
- on the other side of said rear piston (3; 41, 45; 65, 71) an accumulator spring (5; 39; 62) is provided,
- a front cylinder (20, 20', 29") in which a front piston (22, 24; 22", 24") is disposed for movement,
- a rear side of said front piston (22, 24; 22", 24") and the inner wall of said front cylinder (20, 20', 20") define a front ventilation chamber (23, 23', 23"),
- an actuating rod (24, 24") is provided on a front side of said front piston (22, 24; 22", 24") for a brake element of the brake system,
- said rear piston (3; 41, 45; 65, 71) and said front piston (22, 24; 22", 24") are in contact with each other via a displacement rod (11; 46; 70) such that said front piston (22, 24; 22", 24") is displaceable by said rear piston (3; 41, 45; 65, 71),
- in the region between said front cylinder (20, 20', 20") and said rear cylinder (2; 36; 61), an intermediate flange (8; 48; 68) is provided through which said displacement rod (11; 46; 70) is passed,
**characterised by** the following features:
- said intermediate flange (8; 48; 68) is received in an expanded receiving section (7; 38) either only in the interior of said rear cylinder (2; 36; 61) or in the interior of said front cylinder (20, 20', 20"),
- said front cylinder (20, 20', 209") and said rear cylinder (2; 36; 61) are connected to each other in a positive manner, with the outer diaphragm edge of a rubber diaphragm (22; 22'; 22") bearing one side against said intermediate flange (8; 48; 68) and on the other side against the connection of said front cylinder with said rear cylinder.

2. Pneumatic actuator according to Claim 1,
**characterised in that**
a wall of said front cylinder (20, 20', 20") and a wall of said rear cylinder (2; 36; 61) are connected to each other by an edge-rolled section of a wall with a step (21, 21', 21 ") of the respectively other wall.

3. Pneumatic actuator according to any of the preceding Claims,
**characterised in that**
said front piston (22, 24; 22", 24") comprises a flexible diaphragm having substantially the shape of a circular disk or a circular ring, which is connected to the wall of said front cylinder (20, 20', 20") in the region of the outer diaphragm edge (75), with said diaphragm edge (75) being enclosed between the wall of said front cylinder (20, 20', 20") and said intermediate flange (8; 48; 68).

4. Pneumatic actuator according to any of the preceding Claims,
**characterised in that**
said rear piston (41, 45; 65, 71) comprises a flexible diaphragm having substantially the shape of a circular disk or a circular ring, which is connected to the wall of said rear cylinder (36; 61) in the region of the outer diaphragm edge, with said diaphragm edge being enclosed between the wall of said rear cylinder (36; 61) and said intermediate flange (48, 68).

5. Method of assembly of a pneumatic actuator for the brake system of a vehicle, specifically of a spring brake accumulator cylinder, comprising the following steps:
(a) providing a rear cylinder (2; 36; 61),
(b) inserting an accumulator spring (5; 39; 62) into said rear cylinder (2; 36; 61),
(c) inserting a rear piston (3; 41, 45; 65, 71) into said rear cylinder (2; 36; 61),
(d) inserting an intermediate flange (8; 48; 68) into said rear cylinder (2; 36; 61),
(d) fastening a front cylinder (20, 20', 20"), in which a front piston (22, 24; 22", 24") with an actuator rod for a brake element of the brake system is disposed for movement, on said rear cylinder (2; 36; 61), with inclusion of an edge of a flexible diaphragm (22) such that said rear cylinder (2; 36; 61) and said front cylinder (20, 20', 20") are in contact with each other via a displacement rod (11; 46; 70) passing through said intermediate flange (8; 48; 68) and with said front piston (22, 24; 22", 24") being displaceable by said rear piston (3; 41, 45; 65, 71),
with step (e) being carried out subsequently to the steps (a) through (d).

6. Method of assembling a pneumatic actuator for the brake system of a vehicle, in particular of a spring brake accumulator cylinder, comprising the following steps:
(a) providing a rear cylinder,
(b) inserting an accumulator spring into said rear cylinder,
(c) inserting a rear piston into said rear cylinder,
(d) providing a front cylinder in which a front piston with an actuator rod for a brake element of said brake system is disposed for movement,
(e) inserting an intermediate flange into said front cylinder,
(f) fastening a front cylinder on said rear cylinder, with inclusion of an edge of a flexible diaphragm such that said rear cylinder and said front cylinder are in contact with each other via a displacement rod passing through said intermediate flange and with said front piston being displaceable by said rear piston,
with step (f) being carried out subsequently to the steps (a) through (d).

7. Method according to Claim 5 or Claim 6,
**characterised in that**
fastening in step (e) is carried out by welding, screwing, soldering, edge rolling and/or clamping with a collar.

## Revendications

1. Acteur pneumatique (1; 35; 60) pour le système de freinage, en particulier d'un cylindre de frein à accumulateur, ayant les caractéristiques suivantes:
- un cylindre arrière (2; 36; 61) dans lequel un piston arrière (3; 41, 45; 65, 71) est disposé de manière déplaçable,
- un côté dudit piston arrière (3; 41, 45; 65, 71) et la paroi intérieure dudit cylindre arrière (2; 36; 61) définissent une chambre de ventilation arrière (15; 49; 73),
- de l'autre côté dudit piston arrière (3; 41, 45; 65, 71), un ressort d'accumulateur (5; 39; 62) est disposé,
- un cylindre avant (20, 20', 29"), dans lequel un piston avant (22, 24; 22", 24") est disposé de manière mobile,
- un côté arrière dudit piston avant (22, 24; 22", 24") et la paroi intérieure dudit cylindre avant (20, 20', 20") définissent une chambre de ventilation avant (23, 23', 23"),
- une tige actrice (24, 24") est disposée à un côté avant dudit piston avant (22, 24; 22", 24") pour un élément de frein du système de freinage,
- ledit piston arrière (3; 41, 45; 65, 71) et ledit piston avant (22, 24; 22", 24") se trouvent en contact l'un avec l'autre via une tige de déplacement (11; 46; 70) d'une telle façon, que ledit piston avant (22, 24; 22", 24") soit déplaçable par ledit piston arrière (3; 41, 45; 65, 71),
- dans la zone entre ledit cylindre avant (20, 20', 20") et ledit cylindre arrière (2; 36; 61), une bride intermédiaire (8; 48; 68) est disposée, à travers laquelle est passé ladite tige de déplacement (11; 46; 70),
**caractérisé par** les caractéristiques suivantes :
- ladite bride intermédiaire (8; 48; 68) est reçue dans une partie élargie de réception (7; 38) soit seulement à l'intérieur dudit cylindre arrière (2; 36; 61), soit à l'intérieur dudit cylindre avant (20, 20', 20"),
- ledit cylindre avant (20, 20', 209") et ledit cylindre arrière (2; 36; 61) sont raccordés, l'un à l'autre, de manière géométrique, au bord de membrane extérieur d'une membrane en caoutchouc (22; 22'; 22") portant, d'un côté, contre ladite bride intermédiaire (8; 48; 68) et, d'autre côté, contre le raccord dudit cylindre avant audit cylindre arrière.

2. Acteur pneumatique selon la revendication 1,
**caractérisé en ce**
**qu'**une paroi dudit cylindre avant (20, 20', 20") et une paroi dudit cylindre arrière (2; 36; 61) sont raccordées l'une à l'autre par une partie roulée d'une paroi à un gradin (21, 21', 21") de l'autre paroi respective.

3. Acteur pneumatique selon une quelconque des revendications précédentes,
**caractérisé en ce**
**que** ledit piston avant (22, 24; 22", 24") comprend une membrane flexible ayant essentiellement la forme d'un disque circulaire ou d'un anneau circulaire, qui est relié à la paroi dudit cylindre avant (20, 20', 20") dans la zone du bord extérieur de membrane (75), audit bord de membrane (75) étant renfermé entre la paroi dudit cylindre avant (20, 20', 20") et ladite bride intermédiaire (8; 48; 68).

4. Acteur pneumatique selon une quelconque des revendications précédentes,
**caractérisé en ce**
**que** ledit piston arrière (41, 45; 65, 71) comprend une membrane flexible ayant essentiellement la forme d'un disque circulaire ou d'un anneau circulaire, qui est relié à la paroi dudit cylindre arrière (36; 61) dans la zone du bord extérieur de membrane, audit bord de membrane étant renfermé entre la paroi dudit cylindre arrière (36; 61) et ladite bride intermédiaire (48, 68).

5. Procédé de montage d'un acteur pneumatique pour le système de freinage, en particulier d'un cylindre de frein à accumulateur, comprenant les étapes suivantes :
(a) disposition d'un cylindre arrière (2; 36; 61),
(b) insertion d'un ressort d'accumulateur (5; 39; 62) dans ledit cylindre arrière (2; 36; 61),
(c) insertion d'un piston arrière (3; 41, 45; 65, 71) dans ledit cylindre arrière (2; 36; 61),
(d) insertion d'une bride intermédiaire (8; 48; 68) dans ledit cylindre arrière (2; 36; 61),
(d) fixation d'un cylindre avant (20, 20', 20"), dans lequel un piston avant (22, 24; 22", 24") à une tige actrice pour un élément de frein du système de freinage est disposé de façon mobile, audit cylindre arrière (2; 36; 61), à inclusion d'un bord d'une membrane flexible (22) d'une telle manière, que ledit cylindre arrière (2; 36; 61) et ledit cylindre avant (20, 20', 20") se trouvent en contact l'un avec l'autre via une tige de déplacement (11; 46; 70), qui passe à travers ladite bride intermédiaire (8; 48; 68) et audit piston avant (22, 24; 22", 24") étant déplaçable par ledit piston arrière (3; 41, 45; 65, 71),
à l'étape (e) étant réalisée suivant les étapes (a) à (d).

6. Procédé de montage d'un acteur pneumatique pour le système de freinage, en particulier d'un cylindre de frein à accumulateur, comprenant les étapes suivantes :
(a) disposition d'un cylindre arrière,
(b) insertion d'un ressort d'accumulateur dans ledit cylindre arrière,
(c) insertion d'un piston arrière dans ledit cylindre arrière,
(d) disposition d'un cylindre avant, dans lequel un piston avant à une tige actrice pour un élément de frein du système de freinage, est disposé de façon mobile,
(e) insertion d'une bride intermédiaire dans ledit cylindre avant,
(f) fixation d'un cylindre avant audit cylindre arrière, à inclusion d'un bord d'une membrane flexible d'une telle manière, que ledit cylindre arrière et ledit cylindre avant se trouvent en contact l'un avec l'autre via une tige de déplacement, qui passe à travers ladite bride intermédiaire et audit piston avant étant déplaçable par ledit piston arrière,
à l'étape (f) étant réalisée suivant les étapes (a) à (d).

7. Procédé selon la revendication 5 ou la revendication 6,
**caractérisé en ce**
**que** la fixation dans l'étape (e) est réalisée par soudage, vissage, brasage, roulage et/ou serrage à un joint en U.
